# EUROPÄISCHE PATENTANMELDUNG

(11) **EP 2 848 340 A1**
(43) Veröffentlichungstag der Anmeldung: **18.03.2015**
(21) Anmeldenummer: 14184457.1
(22) Anmeldetag: 11.09.2014
(51) Int. Cl.: B23B 51/04, B23B 51/06, B23C 5/28

(54) **Zerspanungswerkzeug, insbesondere Bohr- oder Fräswerkzeug**

(30) Priorität: 13.09.2013 DE 102013110123; 23.12.2013 DE 102013114792
(71) Anmelder: Jakob Lach GmbH & Co. KG, 63452 Hanau (DE)
(72) Erfinder: Maurer, Eugen, 61239 Ober-Mörlen (DE)
(74) Vertreter: Stoffregen, Hans-Herbert

(57) **Zusammenfassung**

Die Erfindung bezieht sich auf ein Zerspanungswerkzeug zur spanenden Bearbeitung von Werkstoffen, umfassend einen Schaft (12) mit einem Werkzeugschneiden (70) aufweisenden Werkzeugkopf (16). Zur effektiven Kühlung der Werkzeugschneiden ist vorgesehen, dass der Schaft (12) einen einzigen in Längsrichtung des Schaftes verlaufenden Kühlmittel-Zulaufkanal (26) und einen einzigen in Längsrichtung verlaufenden Kühlmittel-Rücklaufkanal (28) aufweist und dass der Werkzeugkopf (16) einen einzigen, den Kühlmittel-Zulaufkanal (26) mit dem Kühlmittel-Rücklaufkanal (28) verbindenden Strömungskanal (78) aufweist, welcher thermisch mit den Werkzeugschneiden (70) gekoppelt ist.

## Beschreibung

Die Erfindung bezieht sich auf ein Zerspanungswerkzeug, insbesondere Bohr- oder Fräswerkzeug zur spanabhebenden Bearbeitung von Werkstoffen, umfassend einen Schaft mit einem Werkzeugschneiden aufweisenden Werkzeugkopf. Ferner bezieht sich die Erfindung auf ein Zerspanungswerkzeug wie Bohrwerkzeug oder Fräswerkzeug zur spanabhebenden Bearbeitung von Werkstoffen mit einem eine Vielzahl von Werkzeugschneiden aufweisenden Werkzeugträger wie Hohlbohrer oder Planeckfräser, insbesondere Planeckfräser, wobei die Werkzeugschneiden über Kühlmittel-Zulaufkanäle und über Kühlmittel-Rücklaufkanäle mit Kühlmittel versorgt werden, die in dem Werkzeugträger ausgebildet sind und über eine Kühlmittel-Verteileranordnung mit einem einzigen Kühlmittel-Zulaufkanal sowie einem einzigen Kühlmittel-Rücklaufkanal strömungstechnisch gekoppelt sind, die in einem mit dem Werkzeugträger verbundenen Adapter verlaufen und mit einem Kühlmittelreservoir gekoppelt sind.

Ein Zerspanungswerkzeug der bekannten Art ist in der WO 95/29030 A1 beschrieben. Das Werkzeug umfasst einen um eine Längsachse rotierend antreibbaren Schaft, insbesondere aus Vollhartmetall. An einem Arbeitsende des Schaftes sind Werkzeugschneiden angeordnet und an einem anderen Kupplungsende des Schaftes ist ein Kupplungsbereich zur Verbindung mit der Antriebsspindel einer Werkzeugmaschine vorgesehen. Das Werkzeug weist des Weiteren nebeneinander verlaufende, den Schaft im Wesentlichen in Längsrichtung durchsetzende und in dessen Arbeitsende ausmündende Kanäle zur von der Seite des Kupplungsendes hin zu den Werkzeugschneiden erfolgenden Durchleitung von Fluiden auf. Dabei bilden die Kanäle eine Kühlmittelschleife eines in sich geschlossenen Kühlmittelkreislaufs, wobei zu ihrer räumlichen Verbindung am Arbeitsende ihre dortigen Austrittsöffnungen durch ein nach außen fluiddicht aufgesetztes Verschlussteil miteinander verbunden sind.

Es ist vorgesehen, dass mehrere Kanäle, insbesondere als Kanalpaar, am Arbeitsende in den Freiflächenbereich einer Werkzeugschneide, insbesondere einer Bohrwerkzeugschneide ausmünden und dass ihre Ausmündungsenden durch eine sie gemeinsam überdeckende und einen Abstand zur benachbarten Werkzeugschneide haltende Verschlussplatte unter Herstellung eines nur zwischen den Mündungsenden wirksamen Flüssigkeitsdurchlasses abgedeckt sind.

Bei dem Werkzeug nach dem Stand der Technik münden mehrere Kanäle insbesondere als Kanalpaar am Arbeitsende in den Freiflächenbereich einer Werkzeugschneide, so dass eine ausreichende Kühlung der Werkzeugschneide selbst nicht gewährleistet ist. Für jeden Freiflächenbereich einer Werkzeugschneide ist ein Kanalpaar vorgesehen, so dass die Erstellung des Schaftes sowie die Abdeckung der Mündungsenden mit mehreren fluiddicht aufgesetzten Verschlussteilen aufwendig ist.

Davon ausgehend liegt der vorliegenden Erfindung die Aufgabe zugrunde, ein Werkzeug der eingangs genannten Art derart weiterzubilden, dass bei einfacher Herstellung eine effektive Kühlung von Werkzeugschneiden, insbesondere Diamantwerkzeugschneiden gewährleistet ist.

Die Aufgabe wird gemäß eines ersten eigenerfinderischen Gedankens dadurch gelöst, dass der Schaft einen einzigen in Längsrichtung des Schaftes verlaufenden Kühlmittel-Zulaufkanal und einen einzigen in Längsrichtung verlaufenden Kühlmittel-Rücklaufkanal aufweist und dass der Werkzeugkopf einen einzigen, den Kühlmittel-Zulaufkanal mit dem Kühlmittel-Rücklaufkanal verbindenden Strömungskanal aufweist, welcher thermisch mit den Werkzeugschneiden gekoppelt ist.

Die erfindungsgemäße Lösung zeichnet sich gegenüber dem Stand der Technik dadurch aus, dass mit nur einem Kühlmittel-Zulaufkanal und Kühlmittel-Rücklaufkanal in dem Schaft wie Bohrerschaft sowie einem einzigen Strömungskanal in dem Werkzeugkopf wie Bohrkopf sämtliche Werkzeugschneiden gekühlt werden können.

Bei einer bevorzugten Ausführungsform ist der einzige Strömungskanal thermisch gekoppelt angrenzend an die in dem Werkzeugkopf angeordneten Werkzeugschneiden geführt.

Eine einfache Herstellung des Strömungskanals zeichnet sich dadurch aus, dass der einzige Strömungskanal als zumindest eine Radialbohrung oder als Abschnitt der zumindest einen Radialbohrung in einem Werkzeugkoffer des Werkzeugkopfes ausgebildet ist. Um eine wirksame thermische Kopplung zu erreichen, d. h. zu erreichen, dass der Strömungskanal nahe der Werkzeugschneiden verläuft, ist vorgesehen, dass der einzige Strömungskanal aus radial verlaufenden Abschnitten in Form von Radialbohrungen gebildet ist, die sich von einer radialen Außenfläche des Werkzeugkopfes in Richtung einer Mittelachse erstrecken und im Bereich der Mittelachse ineinander übergehen.

Zur Verbindung des Strömungskanals ist vorgesehen, dass radiale Abschnitte jeweils über in Längsrichtung des Schaftes verlaufende Kanäle mit dem Kühlmittel-Zulaufkanal und dem Kühlmittel-Rücklaufkanal gekoppelt sind.

Zur Verbesserung der Kühleigenschaften ist vorgesehen, dass die radial verlaufenden Kanalabschnitte entlang ihres Verlaufs Kühlrippen bildende Querschnittserweiterungen aufweisen. Der Kühlmittelkanal bzw. die Kühlmittelkanalabschnitte können randseitig mit einem Verschlusselement wie Madenschraube verschlossen werden.

Bei einer Ausführungsform des Zerspanungswerkezugs mit Innenspanabsaugung ist der Schaft als hohlzylinderförmiger Bohrerschaft ausgebildet, wobei der Kühlmittel-Zulaufkanal sowie der Kühlmittel-Rücklaufkanal in einer Wandung des Bohrerschaftes in Längsrichtung vorzugsweise als Tieflochbohrung ausgebildet ist.

Eine weiter bevorzugte Ausführungsform zeichnet sich dadurch aus, dass der Werkzeugkopf als Bohrkopf ausgebildet und mit dem Bohrerschaft lösbar wie schraubbar verbunden ist, dass der Kühlmittel-Zulaufkanal sowie der Kühlmittel-Rücklaufkanal in einem ringförmigen Arbeitsende des hohlzylinderförmigen Bohrerschaftes enden und mit Mündungsöffnungen der in Längsrichtung verlaufenden Kanalabschnitte des Bohrkopfes gekoppelt sind.

Bei einem aus Vollmaterial hergestellten Schaft als Bohrerschaft ist vorgesehen, dass der einzige Kühlmittel-Zulaufkanal sowie der einzige Kühlmittel-Rücklaufkanal in dem Vollmaterial verlaufen, wobei der Werkzeugkopf als Bohrkopf lösbar mit dem Bohrerschaft verbunden ist und mit einer Auflagefläche mit einem Arbeitsende des Bohrerschaftes verbindbar ist, wobei in der Auflagefläche des Bohrkopfes der den Kühlmittel-Zulaufkanal mit dem Kühlmittel-Rücklaufkanal verbindenden Strömungskanal angeordnet ist.

Eine weitere bevorzugte Ausführungsform zeichnet sich dadurch aus, dass der Strömungskanal in der Auflagefläche des Bohrkopfes durch vorzugsweise Fräsen ausgebildet und an Struktur und Lage der Werkzeugschneiden angepasst ist und dass der Strömungskanal bei zweischneidigem Werkzeugkopf vorzugsweise S-förmig ausgebildet ist.

Bei Ausführung des Bohrerschaftes aus einem Vollmaterial kann vorgesehen sein, dass der Strömungskanal über ein in einer Oberfläche des Arbeitsendes in einer Nut angeordnetes Dichtelement wie Dichtlippe abgedichtet ist.

Eine Verdrehen des Bohrkopfes gegenüber dem Bohrerschaft wird dadurch vermieden, dass eine Stirnfläche des Arbeitsendes des Bohrerschaftes eine Verzahnung aufweist, die mit einer korrespondierenden Verzahnung in einer Auflagefläche des Bohrkopfes zusammenwirkt.

Zur Zuführung des Kühlmittels ist vorgesehen, dass der hohlzylinderförmige Bohrerschaft mit einem Adapter verbunden ist, wobei in dem Adapter jeweils ein Verbindungskanal verläuft, der jeweils über den Kühlmittel-Zulaufkanal sowie den Kühlmittel-Rücklaufkanal mit einem Kühlmitte-Reservoir koppelbar ist.

Eine weitere bevorzugte Ausführungsform zeichnet sich dadurch aus, dass der Bohrerschaft eine Werkzeugankopplung aufweist, wobei der Kühlmittel-Zulaufkanal sowie der Kühlmittel-Rücklaufkanal jeweils mit einer Mündungsöffnung in einer Umfangsfläche der Werkzeugankopplung münden und dass auf die Werkzeugankopplung eine vorzugsweise Zweiwege-Drehdurchführung aufsteckbar ist, mit radial verlaufenden Kanälen, die mit den Mündungsöffnungen des Kühlmittel-Zulaufkanals sowie des Kühlmittel-Rücklaufkanals strömungstechnisch gekoppelt sind.

Eine weitere eigenerfinderische Ausführungsform der Erfindung bezieht sich auf ein Zerspanungswerkzeug wie Bohrwerkzeug oder Fräswerkzeug zur spanabhebenden Bearbeitung von Werkstoffen mit einem eine Vielzahl von Werkzeugschneiden aufweisenden Werkzeugträger wie Hohlbohrer oder Fräskopf bzw. Planfräser, wobei die Werkzeugschneiden über Kühlmittel-Zulaufkanäle und über Kühlmittel-Rücklaufkanäle mit Kühlmittel versorgt werden, die in dem Werkzeugträger ausgebildet sind und über eine Kühlmittel-Verteileranordnung mit einem einzigen Kühlmittel-Zulaufkanal sowie einem einzigen Kühlmittel-Rücklaufkanal strömungstechnisch gekoppelt sind, die in einem mit dem Werkzeugträger verbundenen Adapter verlaufen und mit einem Kühlmittelreservoir gekoppelt sind.

Zur einfachen Verteilung von Kühlmittel aus einem Kühlmittel-Reservoir auf eine Vielzahl von Werkzeugschneiden eines rotierenden Zerspanungswerkezugs ist vorgesehen, dass die Kühlmittel-Verteileranordnung einen ringförmigen Kühlmittel-Zulauf-Verteilerkanal aufweist, der eingangsseitig mit dem einzigen Kühlmittel-Zulaufkanal und ausgangsseitig mit der Vielzahl von Kühlmittel-Zulaufkanälen gekoppelt ist und dass die Kühlmittel-Verteileranordnung einen Kühlmittel-Rücklauf-Verteilerkanal aufweist, der eingangsseitig mit der Vielzahl von Kühlmittel-Rücklaufkanälen und ausgangsseitig mit dem einzigen Kühlmittel-Rücklaufkanal gekoppelt ist.

Eine bevorzugte Ausführungsform zeichnet sich dadurch aus, dass die Kühlmittel-Verteileranordnung als ein Kühlmittel-Übergabering ausgebildet ist, umfassend eine Kreisringscheibe, wobei auf einer Vorlaufseite der Kühlmittel-Vorlauf-Verteilerkanal in Form einer Nut ausgebildet ist sowie eine Rücklaufseite, in der der Kühlmittel-Rücklauf-Verteilerkanal in Form einer Nut ausgebildet ist und dass die Kanäle über Auslauf- und/oder Rücklauföffnungen mit den Kühlmittel-Rücklaufkanälen und/oder Kühlmittel-Zulaufkanälen gekoppelt sind.

Des Weiteren ist vorgesehen, dass die in dem Kühlmittel-Übergabering angeordneten kreisringförmigen Nuten jeweils über kreisringförmige Dichtelemente abgedichtet und zwischen einer Flanschverbindung zwischen einem hohlzylinderförmigen Bohrerschaft und dem Adapter angeordnet sind.

Eine Fixierung der Dichtelemente bezogen auf den Kühlmittel-Übergabering erfolgt über Stifte, die drehsicher in einem umlaufenden Flansch des Adapters aufgenommen sind.

Eine weitere bevorzugte Ausführungsform eines Planeckfräsers zeichnet sich dadurch aus, dass die Kühlmittel-Verteileranordnung in einer Oberfläche des tellerförmigen Fräskopfes bzw. Planeckfräsers angeordnet ist, umfassend einen ringförmig umlaufenden Kühlmittel-Zulauf-Verteilerkanal, der eingangsseitig mit dem einzigen Kühlmittel-Zulaufkanal und ausgangsseitig mit der Vielzahl von Kühlmittel-Zulaufkanälen gekoppelt ist sowie ein ringförmig umlaufender Kühlmittel-Rücklauf-Verteilerkanal, der eingangsseitig mit der Vielzahl von Kühlmittel-Rücklaufkanälen und ausgangsseitig mit dem einzigen Kühlmittel-Rücklaufkanal, der in einem Adapter verläuft, gekoppelt ist.

Eine besonders einfache Ausführungsform zeichnet sich dadurch aus, dass der Kühlmittel-Zulauf-Verteilerkanal sowie der Kühlmittel-Rücklauf-Verteilerkanal jeweils als ringförmig umlaufende Nut in der Oberfläche des Fräskopfes ausgebildet sind, wobei zwischen den Kanälen Dichtelemente in Form von O-Ringen verlaufen und wobei die Verteilerkanäle sowie die Dichtelemente durch eine Abdeckung fluiddicht abgedichtet sind.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.
- Fig. 1: eine Seitenansicht einer ersten Ausführungsform eines Zerspanungswerkzeugs in Form eines Bohrwerkzeugs mit Innenspanabsaugung und Innenkühlung,
- Fig. 2: eine Unteransicht des Bohrwerkzeugs gemäß Fig. 1,
- Fig. 3: eine Schnittdarstellung des Bohrwerkzeugs gemäß Fig. 1 entlang der Schnittlinie A-A gemäß Fig. 2,
- Fig. 4: eine Schnittdarstellung eines Bohrkopfes des Bohrwerkzeugs gemäß Fig. 1 entlang einer Schnittlinie B-B gemäß Fig. 2,
- Fig. 5: eine Schnittdarstellung des Bohrkopfes entlang der Schnittlinie A-A gemäß Fig. 2,
- Fig. 6: eine perspektivische Ansicht einer zweiten Ausführungsform eines Zerspanungswerkzeugs in Form eines Bohrwerkzeugs mit Bohrerschaft und lösbar befestigtem Bohrkopf mit Innenkühlung,
- Fig. 7: eine Seitenansicht des Bohrwerkzeugs gemäß Fig. 6 in 0°-Stellung mit Drehdurchführung,
- Fig. 8: eine Seitenansicht des Bohrerschaftes gemäß Fig. 7 in 90°-Stellung,
- Fig. 9: eine Unteransicht des Bohrkopfes gemäß Fig. 7,
- Fig. 10: eine Explosionsdarstellung des Bohrerschaftendes mit Bohrkopf,
- Fig. 11: eine Seitenansicht des Bohrkopfes in 0°-Stellung, teilweise geschnitten,
- Fig. 12: eine Unteransicht des Bohrkopfes in 0°-Stellung,
- Fig. 13: eine Seitenansicht des Bohrkopfes in 90°-Stellung,
- Fig. 14: eine perspektivische Draufsicht des Bohrkopfes mit Kühlmittel-Strömungskanal,
- Fig. 15: eine perspektivische Seitenansicht des Bohrkopfes,
- Fig. 16: eine perspektivische Ansicht einer dritten Ausführungsform eines Zerspanungswerkzeugs in Form eines Bohrwerkzeugs mit Bohrerschaft, Bohrkopf und Drehdurchführung,
- Fig. 17: eine perspektivische Explosionsdarstellung eines Arbeitsendes des Bohrschaftes mit Bohrkopf,
- Fig. 18: eine perspektivische Vorderansicht des Bohrkopfes,
- Fig. 19: eine Unteransicht des Bohrkopfes,
- Fig. 20: eine Draufansicht des Bohrkopfes mit Kühlmittel-Strömungskanal,
- Fig. 21: eine perspektivische Ansicht einer vierten Ausführungsform eines Zerspanungswerkzeugs in Form eines Hohlbohrers mit Innenspanabsaugung und Innenkühlung,
- Fig. 22: eine perspektivische Explosionsdarstellung des Hohlbohrers gemäß Fig. 21,
- Fig. 23 a, b, c: ein Kühlmittelübergabering in Vorderansicht, Seitenansicht und Rückansicht,
- Fig. 24: eine Seitenansicht des Hohlbohrers gemäß Fig. 22,
- Fig. 25: eine Unteransicht des Hohlbohrers gemäß Fig. 22,
- Fig. 26: eine Schnittdarstellung eines Abschnitts eines Zwischenadapters entlang der Schnittlinie B-B gemäß Fig. 25,
- Fig. 27: eine perspektivische Explosionsdarstellung einer fünften Ausführungsform eines Zerspanungswerkzeugs in Form eines Planeckfräsers mit Spanabsaugung und Innenkühlung,
- Fig. 28: eine Seitenansicht des Planeckfräsers gemäß Fig. 27,
- Fig. 29: eine Schnittdarstellung des Planeckfräsers gemäß Fig. 28,
- Fig. 30: eine Unteransicht des Planeckfräsers gemäß Fig. 28,
- Fig. 31: eine Schnittdarstellung eines Teilabschnitts des tellerförmigen Fräskopfes entlang einer Schnittlinie A-A gemäß Fig. 30 und
- Fig. 32: eine perspektivische Explosionsdarstellung eines Fräskopfes des Planeckfräsers gemäß Fig. 27.

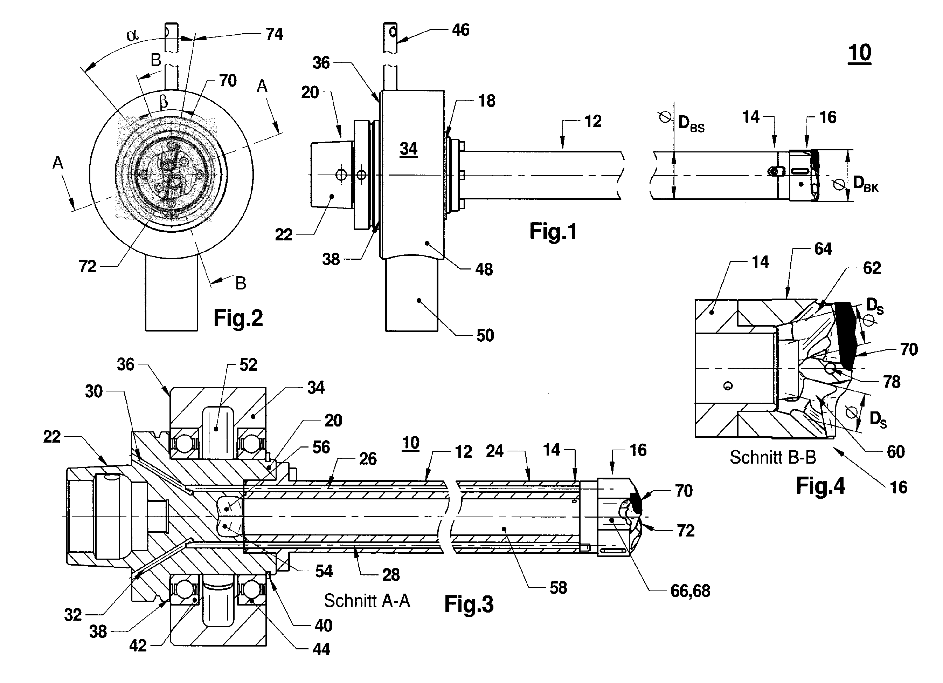

Fig. 1 zeigt eine erste Ausführungsform eines Zerspanungswerkzeugs in Form eines Bohrwerkezugs 10 mit Innenspanabsaugung und Innenkühlung. Das Bohrwerkzeug 10 umfasst einen Bohrerschaft 12, an dessen Arbeitsende 14 ein Bohrkopf 16 befestigt wie verschraubt ist. Der Bohrerschaft 12 ist über einen Flansch 18 mit einem Adapter 20 verbunden, der werkzeugmaschinenseitig einen Schaft 22 nach HSK (Hohl-Schaft-Kegel-Norm) aufweist. Zur Kühlung des Werkzeugkopfes 16 sind in einer Wandung 24 des innen hohlen Bohrerschaftes 12 ein in Längsrichtung des Bohrerschaftes 12 verlaufender Kühlmittel-Zulaufkanal 26 sowie ein in Längsrichtung des Hohlschaftes verlaufender Kühlmittel-Rücklaufkanal 28 angeordnet. Der Kühlmittel-Zulaufkanal 26 sowie der Kühlmittel-Rücklaufkanal münden jeweils in einen Verbindungkanal 30, 32, der in dem Adapter 20 verläuft und den Kühlmittel-Zulaufkanal 26 sowie den Kühlmittel-Rücklaufkanal 28 mit einem Kühlmittelreservoir verbindet.

An dem Adapter 20 ist des Weiteren ein Absaugring 34 gelagert, der mit einer Seitenfläche 36 gegen einen Flansch 38 des Adapters anliegt und mit einem Fixierelement wie Sprengring 40 auf dem Adapter 20 in axialer Richtung fixiert ist. Der Absaugring 34 ist über Lager 42, 44 auf einer zylinderförmigen Fläche des Adapters 20 gelagert und kann über einen Stift 46 gegen Drehen fixiert werden. Von einer umlaufenden Randfläche 48 erstreckt sich ein Absaugrohr 50, welches mit einem im Inneren des Absaugrings umlaufenden Ringkanal 52 strömungstechnisch gekoppelt ist. Dieser mündet über Absaugöffnungen 54, 56 in der zylinderförmigen Wandung des Adapters 20 in einen Absaugkanal 58 des innen hohlen Schaftes 12. Der Absaugkanal 58 mündet in Saugöffnungen 60, 62, die in dem Bohrkopf 16 zum Absaugen von Spänen angeordnet sind.

Bei der hier dargestellten Ausführungsform ist vorgesehen, dass der Bohrkopf 16 in seiner Außenwandung 64 in Längsrichtung des Bohrkopfes 16 verlaufende, in die stirnseitigen Sauföffnungen 60, 62 mündende Aussparungen 66, 68 als Überstromkanäle aufweist. Durch die Überströmkanale 66, 68 wird erreicht, dass eine durch den zwischen Bohrloch und Aussparung 66, 68 gebildeten Zwischenraum angesaugte Zuluft gezielt an Werkzeugschneiden 70, 72 des Bohrkopfes vorbeigeführt wird, um dort entstehende Späne bzw. Wärme effektiv abzuführen. Der Bohrkopf 16 weist einen Durchmesser D_{BK} auf, der größer als ein Durchmesser D_{BS} des Bohrerschaftes 12 ist. Vorzugsweise kann der Durchmesser D_{BK} des Bohrkopfes ca. 59 mm betragen, während der Durchmesser D_{BS} des Bohrerschaftes ca. 50 mm beträgt.

Der Bohrkopf 16 weist eine Außenwandung 64 auf, die den Durchmesser D_{BK} des Bohrkopfes bestimmt. Die stirnseitigen Werkzeugschneiden 70, 72 erstrecken sich diagonal entlang einer Radiallinie 74. In die Außenwandung 64 sind in Längsrichtung die Aussparungen 66, 68 als Überströmkanäle eingeformt, in die Saugöffnungen 60, 62 münden. Die Aussparungen 66, 68 erstrecken sich entlang des Umfangs in einem Winkel α, ausgehend von der Radiallinie 74, wobei der Winkel α etwa 45° beträgt. Die Mittelpunkte der Sauföffnungen 60, 62 sind bezogen auf die Radiallinie 74 in Drehrichtung des Bohrwerkzeugs in einem Winkel von etwa 30° angeordnet.

Wie bereits zuvor erwähnt, sind zur Kühlung des Werkzeugkopfs 16 in der Wandung 24 des innen hohlen Bohrerschaftes 12 jeweils ein Kühlmittel-Zulaufkanal 26 sowie ein Kühlmittel-Rücklaufkanal 28 in Form einer Tieflochbohrung angebracht. Die Kanäle 26, 28 münden in einen in dem Bohrkopf 16 verlaufenden, einen Kühlraum bildenden Strömungskanal 78, der den Kühlmittel-Zulaufkanal 26 mit dem Kühlmittel-Rücklaufkanal 28 verbindet. Der Strömungskanal 78 verläuft in dem Bohrkopf 16 angrenzend an die z. B. Diamantwerkstoff aufweisenden Werkzeugschneiden, um diese effektiv zu kühlen.

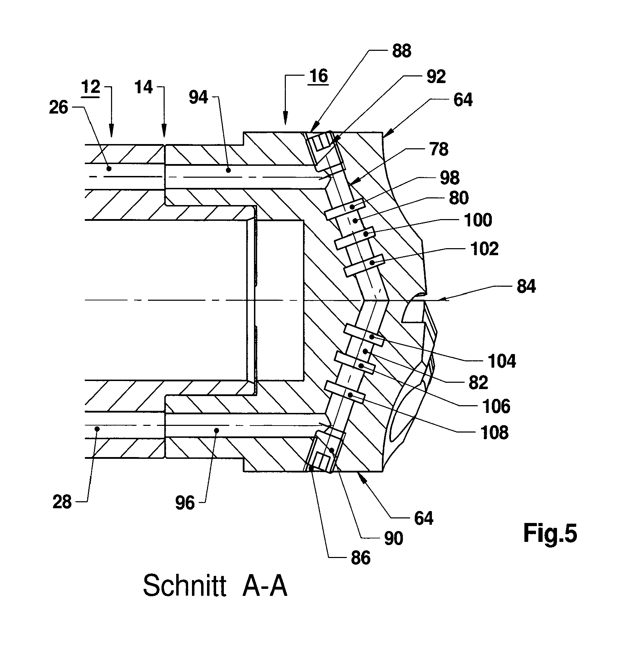

Fig. 5 zeigt den Bohrkopf 16 sowie das Arbeitsende 14 des Bohrerschaftes 12 in Schnittdarstellung. Der Strömungskanal 78 ist im dargestellten Ausführungsbeispiel abschnittsweise aus radial verlaufenden Abschnitten 80, 82 wie Bohrungen gebildet, die sich von der Außenfläche 64 des Bohrkopfes in Richtung der Mittelachse 84 erstrecken und im Bereich der Mittelachse 84 ineinander übergehen. Eine außenwandseitige Öffnung 86, 88 der radialen Abschnitte 80, 82 ist jeweils durch ein Verschlusselement 90, 92 wie Madenschraube verschlossen, die sich in radialer Richtung in einem Gewinde erstreckt. Die radialen Abschnitte 80, 82 des Strömungskanals 78 sind jeweils über in Längsrichtung verlaufende Kanäle 94, 96 mit dem Kühlmittel-Zulaufkanal 26 bzw. dem Kühlmittel-Rücklaufkanal 28 gekoppelt.

Zur Verbesserung der Kühlwirkung weisen die radial verlaufenden Kanalabschnitte 80, 82 entlang des Kanalverlaufs Querschnittserweiterungen 98, 100, 102; 104, 106, 108 auf, durch die "Kühlrippen" gebildet werden. Die Kanäle 80, 82 derart angeordnet, dass diese in thermisch optimaler Kopplung, vorzugsweise unmittelbar unterhalb der Werkzeugschneiden 70, 72 angeordnet sind.

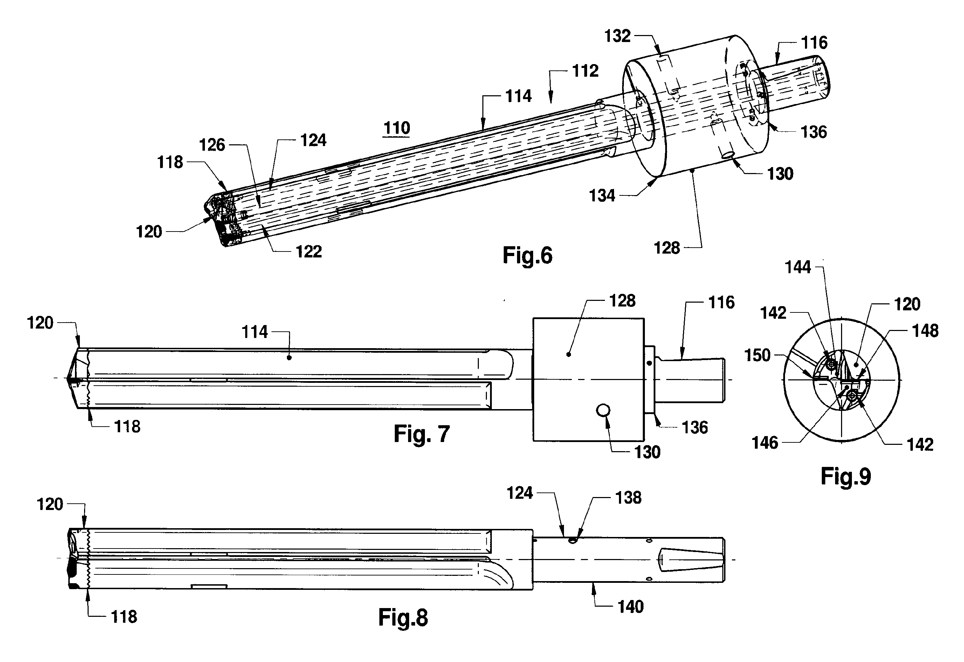

Die Fig. 6 bis 15 zeigen eine zweite Ausführungsform eines Zerspanungswerkzeugs in Form eines Bohrwerkzeugs 110 als Vollbohrer mit Innenkühlung. Das Bohrwerkzeug 110 umfasst einen Grundkörper 112 mit einem Bohrerschaft 114 und einer Werkzeugankopplung 116. An einem Arbeitsende 118 des Bohrerschafts 114 ist ein Bohrkopf 120 lösbar befestigt wie verschraubt. Zur Kühlung des Bohrkopfs 120 sind in dem Bohrerschaft 114, der aus Vollmaterial, vorzugsweise einem Hartmetall besteht, ein Kühlmittel-Zulaufkanal 122 sowie ein Kühlmittel-Rücklaufkanal 124 in Längsrichtung ausgebildet. Vorzugsweise werden der Kühlmittel-Zulaufkanal sowie der Kühlmittel-Rücklaufkanal als Tieflochbohrung in dem Bohrerschaft 14 hergestellt.

Des Weiteren ist zur Spülung des Bohrkopfes mit Luft ein Luft-Spülungskanal 126 in dem Bohrerschaft 114 ausgebildet. Auf der Werkezugankopplung 116 ist eine Zweiwege-Drehdurchführung 128 drehbar gelagert, die radiale Kanäle 130, 132 aufweist, die sich von einer Außenwandung 134 radial ins Innere erstrecken und fluidtechnisch mit jeweils dem Kühlmittel-Zulaufkanal 124 bzw. dem Kühlmittel-Rücklaufkanal 122 gekoppelt sind. Die Zweiwege-Drehdurchführung 128 ist mittels eines Sicherungsrings 136 auf der Werkzeugankopplung 116 fixiert.

Wie in Fig. 8 dargestellt ist, mündet der Kühlmittel-Rücklaufkanal 124 in einer Mündungsöffnung 138 mit einer Außenfläche 140 der Werkzeugankopplung 116 und ist fluidtechnisch mit der Radialbohrung 132 in der Zweiwege-Drehdurchführung gekoppelt.

Fig. 9 zeigt eine Draufsicht des Bohrkopfs 120, der Mittels Befestigungsmitteln wie Schrauben 142 mit dem Arbeitsende 118 des Bohrerschafts 114 verbunden wie verschraubt ist. Der Spülluftkanal 126 mündet in Öffnungen 144, 146, die in Freiflächen des Bohrerkopfs, d.h. in Drehrichtung hinter Werkzeugschneiden 148, 150 angeordnet sind. Die Werkzeugschneiden 148, 150 sind aus einem Diamantwerkstoff gefertigt und mit dem Bohrerkopf 120 verbunden wie verlötet.

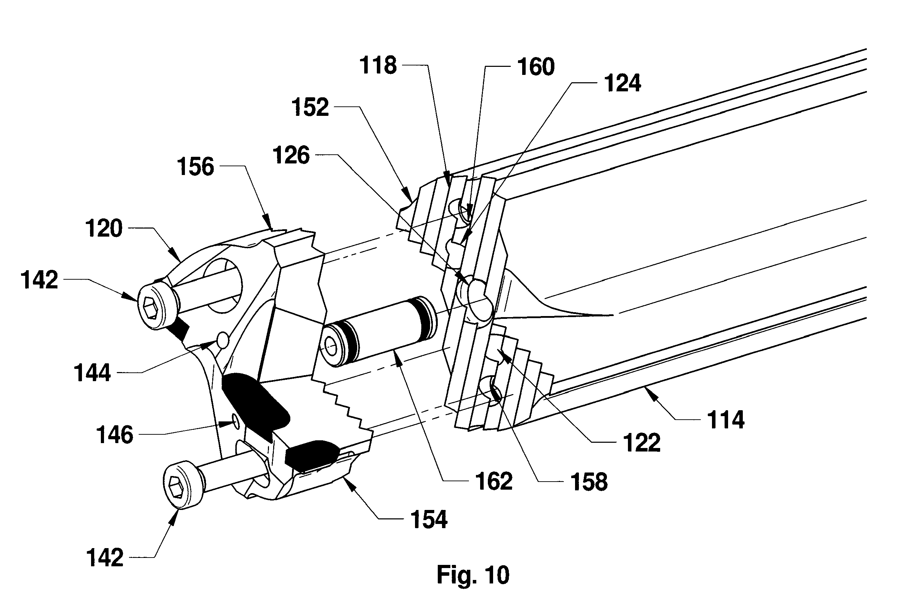

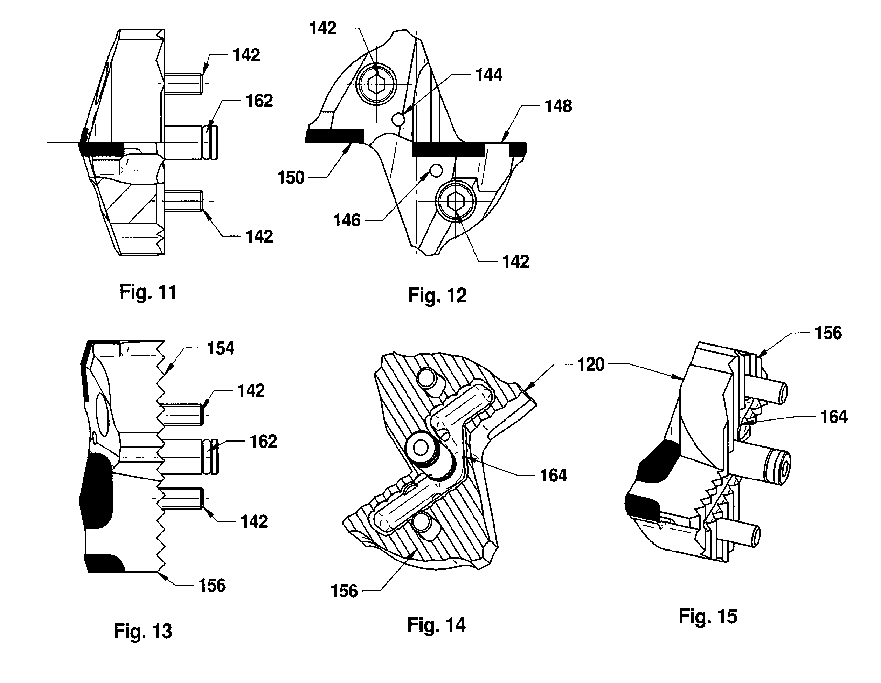

Fig. 10 zeigt eine Verbindung zwischen dem Bohrerschaft 114 und dem Bohrkopf 120 in einer perspektivischen Explosionsdarstellung. Der Bohrkopf 120 ist über die Schrauben 142 mit dem Arbeitsende 118 des Bohrerschafts 114 befestigt. Eine Stirnfläche 152 des Arbeitsendes 118 weist eine Verzahnung auf, die mit einer korrespondierenden Verzahnung 154 einer Auflagefläche 156 des Bohrkopfes korrespondiert. In der Stirnfläche 152 des Bohrerschafts sind Aufnahmen 158, 160 für die Befestigungsmittel 142 vorgesehen. Der Spülluftkanal 126 mündet in die Stirnfläche 152 und ist über ein Verbindungsrohr 162 mit Luftkanälen 164, 166 gekoppelt, die in dem Bohrkopf verlaufen und in Freiflächen des Bohrkopfs münden. Des Weiteren zeigt Fig. 14, dass sowohl der Kühlmittel-Rücklaufkanal 124 als auch der Kühlmittel-Zulaufkanal 122 in der Stirnfläche 152 münden.

Fig. 14 und 15 zeigen die Auflagefläche 156 des Bohrkopfs 120, wobei in der Auflagefläche 156 ein einen Kühlraum bildenden Strömungskanal 164 ausgebildet ist, der den Kühlmittel-Zulaufkanal 122 mit dem Kühlmittel-Rücklaufkanal 124 verbindet. Der Strömungskanal 164 wird mit einem Fräser profiliert und an die Struktur und Lage der Diamantschneiden 148, 150 angepasst. Bei einem zweischneidigen Werkzeug ist ein Verlauf des Kühlmittelkanals 164 ist derart gestaltet, dass dieser im Wesentlichen S-förmig ausgebildet ist, so dass eine optimale thermische Kopplung mit den Werkzeugschneiden 148, 150 gewährleistet ist. Vorzugsweise ist der Strömungskanal 164 mittels eines Fräsverfahrens in die Auflagefläche 156 des Bohrkopfs 120 eingearbeitet.

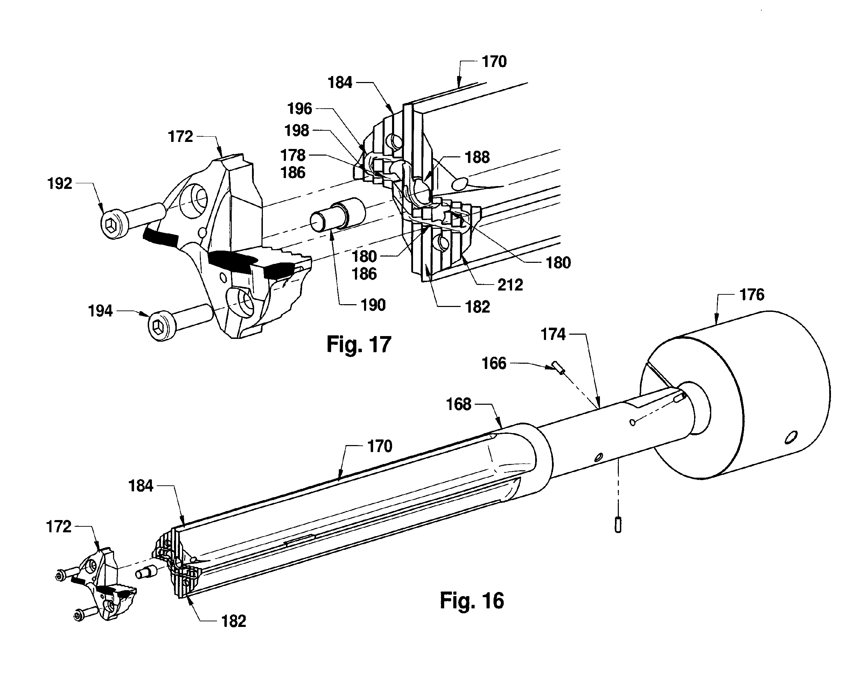

Fig. 16 - 20 zeigen eine dritte Ausführungsform eines Zerspanungswerkezugs in Form eines Bohrwerkzeugs 166 als Vollbohrer, mit einem Grundkörper 168, umfassend einen Bohrerschaft 170 mit Bohrkopf 172 sowie einer Werkzeugankopplung 174, auf die eine Zweiwege-Drehdurchführung 176 aufsteckbar ist. Im Inneren des Bohrerschafts 170 verläuft in Längsrichtung ein Kühlmittel-Zulaufkanal 178 sowie ein Kühlmittel-Rücklaufkanal 180, die jeweils in einer Stirnfläche 182 eines Arbeitsendes 184 des Bohrerschafts 170 mit Austrittsöffnungen 186 münden.

Des Weiteren ist ein Spülluft-Kanal 188 vorgesehen, der über ein Koppelelement 190, in Form eines Luft-Übergaberohrs mit Luftaustrittsöffnungen gekoppelt ist, die in dem Bohrkopf 172 verlaufen. Der Bohrkopf 172 ist über Befestigungselemente wie Schrauben 192, 194 mit dem Arbeitsende 184 des Bohrerschafts 170 verbindbar.

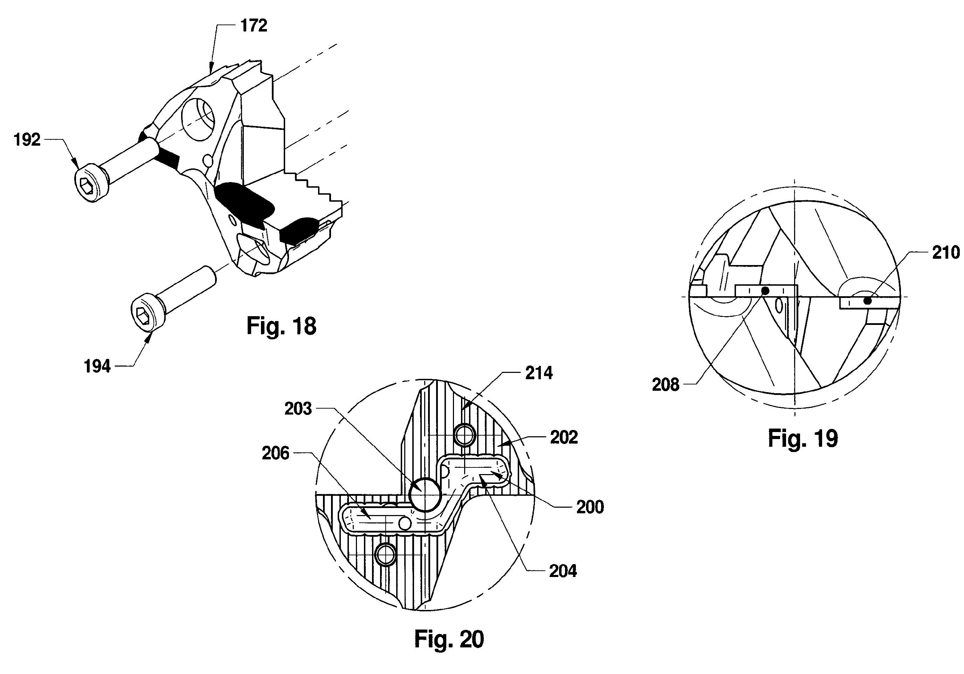

Das Bohrwerkzeug 166 unterscheidet sich von der Ausführungsform des Bohrwerkzeugs 110 dadurch, dass in der Stirnfläche 182 eine Nut 196 für ein Dichtelement 198 vorgesehen ist. Das Dichtelement 198 korrespondiert mit einem Strömungskanal 200, der in einer Auflagefläche 202 des Bohrkopfs 176 angeordnet ist und diesen Abdichtet. Der Strömungskanal 200 weist im Wesentlichen einen S-förmigen Verlauf auf. Im Gegensatz zu der Ausführungsform gemäß Bohrwerkzeug 110 verläuft der Strömungskanal 200 nicht durch eine Mittelachse 203 des Bohrerschafts 170, so dass das Koppelelement 190 den Strömungskanal nicht durchquert. Der Strömungskanal 200 weist Längsabschnitte 204, 206 auf, die parallel oder im Wesentlichen parallel sowie in thermischer Kopplung zu den Werkzeugschneiden 208, 210 verlaufen, die in Fig. 19 in Draufsicht dargestellt sind. Zur mechanischen Fixierung des Bohrkopfs 172 an dem Arbeitsende 182 des Bohrerschafts 170 ist vorgesehen, dass sowohl das Arbeitsende 184 des Bohrerschaftes als auch die Auflagefläche 202 des Bohrkopfes eine Verzahnung 212, 214, die im zusammengesetzten Zustand ineinandergreifen und ein Verdrehen des Bohrkopfs 172 relativ zu dem Bohrerschaft 170 verhindern.

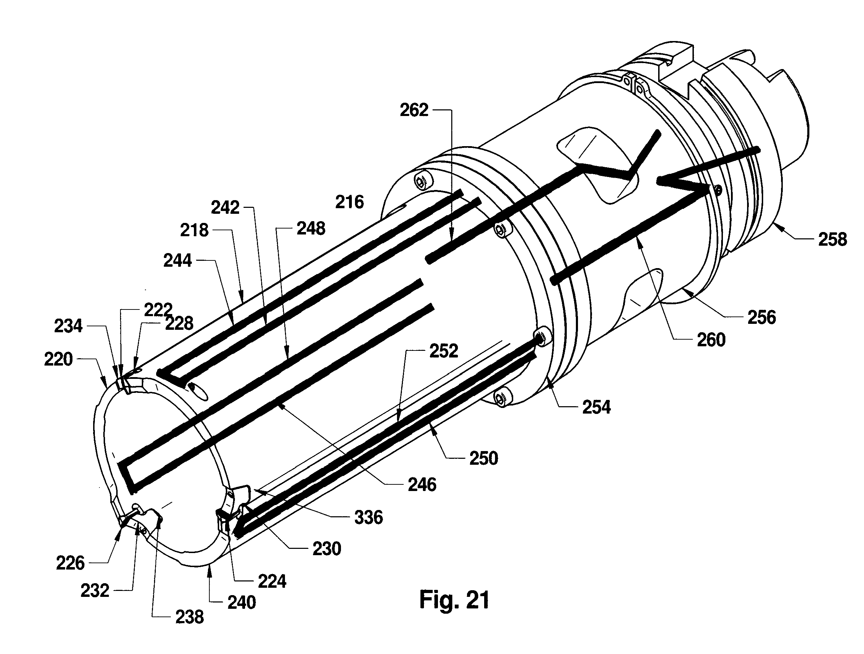

Eine vierte Ausführungsform eines Zerspanungswerkzeugs bezieht sich auf ein Bohrwerkzeug in Form eines Hohlbohrers 216 mit Innenkühlung und Innenspanabsaugung. Der Hohlbohrer 216 wird nachfolgend unter Bezugnahme auf die Fig. 21 bis 26 beschrieben. Ein rohrförmiger Bohrerschaft 218 weist an seinem stirnseitigen Arbeitsende 220 entlang eines Umfangs gleichmäßig verteilte Diamantschneiden 222, 224, 226 auf, die jeweils mittels eines Fixierelements 228, 230, 232 in einer Aussparung 234, 236, 238 in einer Seitenwandung 240 des Bohrerschafts 218 fixiert sind.

Zur Kühlung der Diamantschneiden 222, 224, 226 verlaufen in der Wandung 240 des innen hohlen Bohrerschafts (Hohlbohrerkörper) 218 jeweils ein Kanalpaar aus einem Kühlmittel-Zulaufkanal 242, 246, 250 sowie einem Kühlmittel-Rücklaufkanal 244, 248, 252.

Der Bohrerschaft 218 ist über einen Verbindungsflansch 254 mit einem Adapter 256 verbunden, der mit einer Werkzeugmaschine mit Kühlmittelreservoir 258 verbindbar ist. In dem Adapter 256 ist ein einziger Kühlmittel-Zulaufkanal 216 sowie ein einziger Kühlmittel-Rücklaufkanal 262 angeordnet. Die Kühlmittelkanäle 260, 262 sind mit einem Kühlmittelreservoir (nicht dargestellt) verbunden.

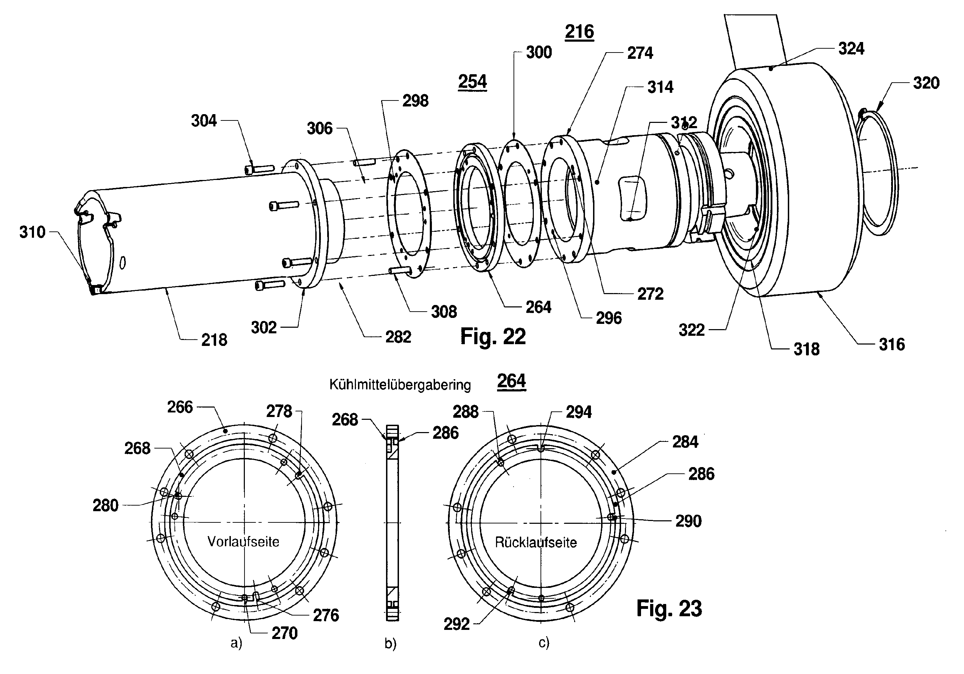

Fig. 22 zeigt eine Explosionsdarstellung des Hohlbohrers 216. Der Hohlbohrer 210 weist eine eigenerfinderische Kühlmittel-Verteileranordnung 264 auf, die vorzugsweise in dem Verbindungsflansch 254 integriert ist. Die Kühlmittel-Verteileranordnung verteilt das durch den einzigen Kühlmittel-Zulaufkanal 216 zugeführte Kühlmittel auf die in dem Bohrerschaft 218 verlaufenden Kühlmittel-Zulaufkanäle 242, 246, 250 und leitet das durch die Kühlmittel-Rücklaufkanäle 244, 248, 252 rücklaufende Kühlmittel auf den einzigen Kühlmittel-Rücklaufkanal 262.

Fig. 23 zeigt den Kühlmittelübergabering 264 in einer Vorderansicht, Seitenansicht sowie Rückansicht. Eine Vorlaufseite 266 weist einen ringförmigen Kühlmittel-Vorlauf-Verteilerkanal 268 in Form einer Nut auf, die über eine Zulauföffnung 270 mit einer Zulauföffnung 272 des Kühlmittel-Zulaufkanals 260 koppelbar ist, die in einen umlaufenden Flansch 274 des Adapters 256 stirnseitig mündet. Des Weiteren zweigen von der ringförmigen Nut 268 Auslauföffnungen 276, 278, 280 ab, die zur Bildung einer Strömungsverbindung mit den Kühlmittel-Zulaufkanälen 242, 246, 250 koppelbar sind, die in einem stirnseitig umlaufenden Rand 282 des Bohrerschafts 218 münden.

Auf einer Rücklaufseite 284 des Kühlmittelübergaberings ist ein Kühlmittel-Rücklauf-Verteilerkanal 286 in Form einer Nut ausgebildet, die über Rücklauföffnungen 288, 290, 292 mit den Kühlmittel-Rücklaufkanälen 244, 248, 252 koppelbar ist, die in die Stirnseite 282 des Bohrerschafts 218 münden. Des Weiteren ist der Verteilerkanal 286 über eine Öffnung 294 mit einer Mündungsöffnung 296 des einzigen Kühlmittel-Rücklaufkanals 262 verbindbar.

Die Vorlaufseite 266 sowie die Rücklaufseite 284 des Kühlmittelübergaberings 264 sind jeweils mit einer kreisringförmigen Dichtung 298, 300 abgedichtet, die in montiertem Zustand zwischen dem umlaufenden Flansch 274 des Adapters 256 und einem umlaufenden Flansch 302 des Bohrerschafts 218 zusammen mit dem Kühlmittelübergabering 264 mittels Befestigungselementen 304 wie Schrauben verspannbar sind.

Zur Fixierung der kreisringförmigen Dichtungen 298, 300 in Bezug auf den Kühlmittelübergabering 264 sind Stifte 306, 308 vorgesehen, die den Kühlmittelübergabering sowie die Dichtungen durchsetzen und in den Flanschen 272, 302 endseitig fixiert sind.

Wie bereits zuvor erwähnt, handelt es sich bei dem beschriebenen Bohrwerkzeug 216 um einen Hohlbohrer mit Innenkühlung sowie Innenspanabsaugung. Die Absaugung erfolgt über einen inneren Absaugkanal 310 des Bohrschafts 318 und über Ansaugöffnungen 312, die in einer Seitenwandung 314 des Adapters 256 angeordnet und strömungstechnisch mit dem inneren Absaugkanal 310 des Bohrerschafts 218 verbunden sind.

Auf der zylinderförmig ausgebildeten Oberfläche 314 des Adapters 256 ist ein Absaugring 316 mittels Kugellager 318 gelagert. Die Kugellager 318 sind in Lageraufnahmen des Absaugrings 316 aufgenommen, wobei ein erstes Kugellager gegen den umlaufenden Flansch 272 des Adapters 256 anliegt und wobei ein zweites Kugellager des Absaugrings 316 mittels eines Sicherungselements 320 wie Sprengring lagefixiert ist.

Der Absaugkanal 310 des Bohrerschafts 218 mündet in die Absaugöffnungen 312, die ihrerseits in einen strömungstechnisch gekoppelten Ringspalt 322, der im Inneren des Absaugrings 316 umläuft, münden, wobei der Ringspalt 322 strömungstechnisch mit einem Absaugrohr 324 zum Absaugen der Späne gekoppelt ist.

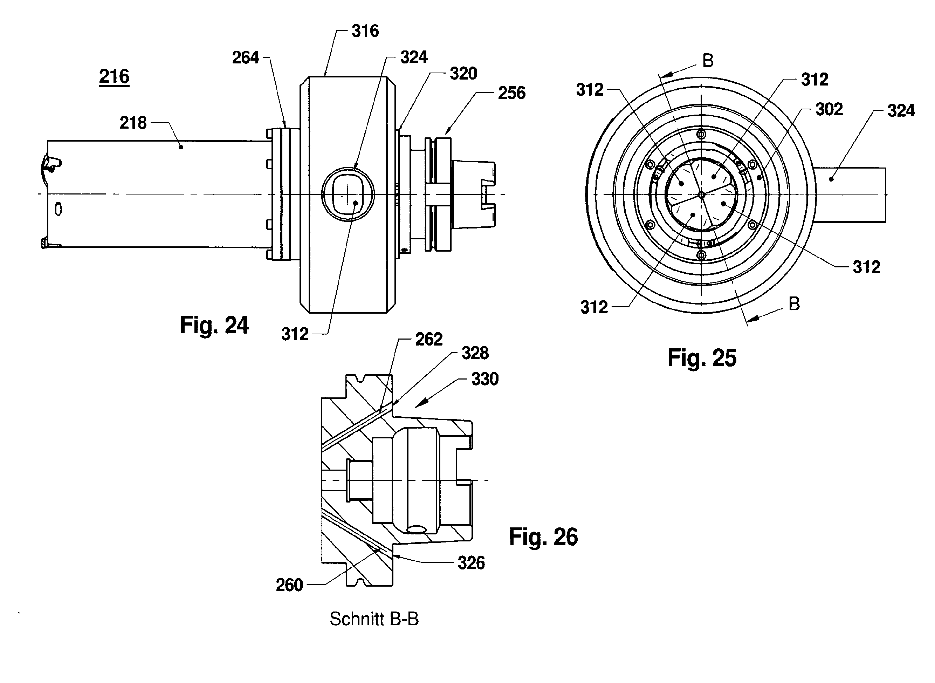

Fig. 24 zeigt den Hohlbohrer 216 in montiertem Zustand, wobei der Absaugring 316 auf dem Adapter 256 aufgesteckt und mittels des Fixierelements 320 fixiert ist.

Fig. 25 zeigt eine Unteransicht des Hohlbohrers 216 mit den Absaugöffnungen 312, die in den Ringspalt 322 des Absaugrings 316 münden.

Fig. 26 zeigt eine Schnittdarstellung eines Endabschnittes des Adapters 256 entlang der Schnittlinie B-B gemäß Fig. 25. Der einzige Kühlmittel-Zulaufkanal 260 sowie der Kühlmittel-Rücklaufkanal 262 weisen Mündungsöffnungen 326, 328 auf, die in einem umlaufenden Absatz 330 des Adapters 256 münden und über einen Anschluss (nicht dargestellt) mit einem Kühlmittelreservoir verbindbar sind.

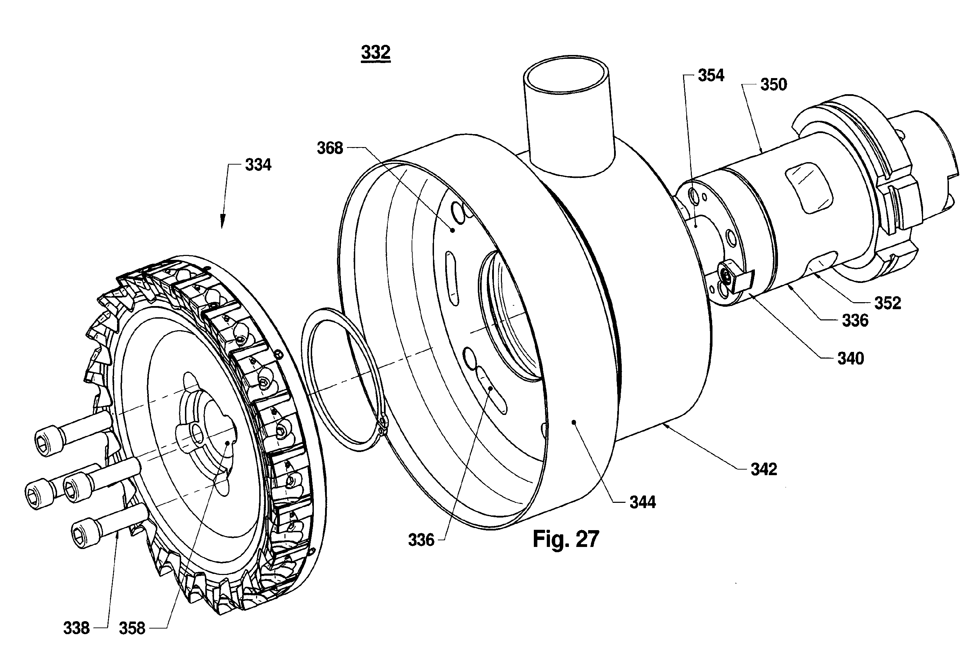

Fig. 27 bis 32 zeigen eine fünfte Ausführungsform eines Zerspanungswerkzeugs in Form eines Werkzeugs 332, das mit einer eigenerfinderischen Innen- und/oder Außenspanabsaugung sowie einer eigenerfinderischen Innenkühlung ausgebildet ist.

Das Fräserwerkzeug 332 umfasst einen tellerförmigen Planeckfräser 334, der mittels eines Adapters 336 mit einer Werkzeugmaschine koppelbar ist. Der Planeckfräser 334 ist über Verbindungselemente 338 wie Schrauben mit einem Flansch 340 des Adapters 336 verbindbar. Auf dem Adapter 336 ist ein Absaugring 342 drehbar gelagert. An den Absaugring 342 schließt sich eine haubenförmige Abdeckung 344 an, in der der Fräskopf 334 aufgenommen ist.

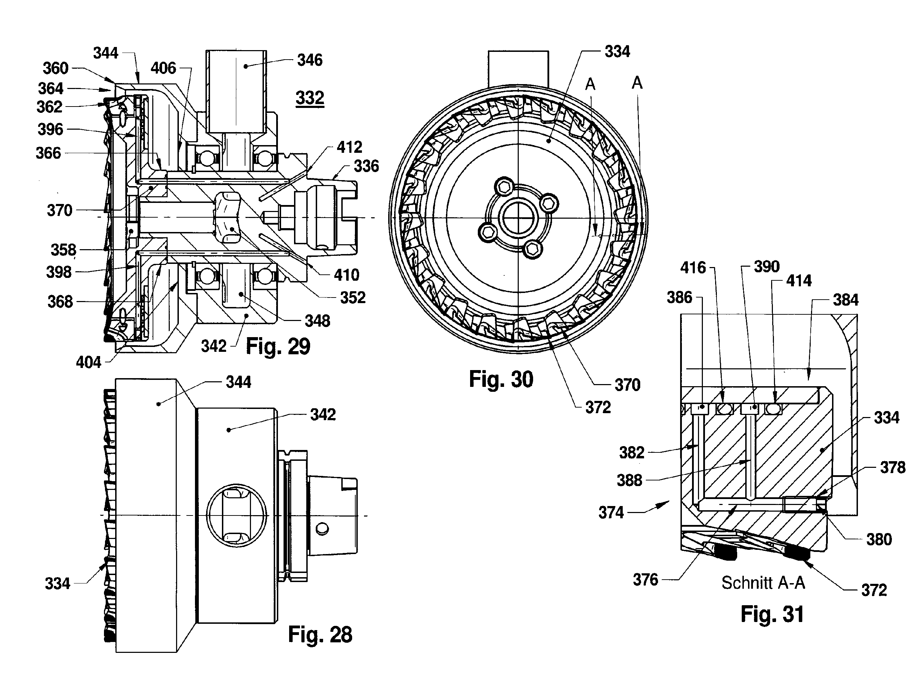

Fig. 28 zeigt eine Seitenansicht des Fräserwerkzeugs 332 in montiertem Zustand, wobei der Planeckfräser 334 in der Absaughaube 344 des Absaugrings 342 angeordnet ist.

Fig. 29 zeigt eine Seitenansicht des Fräserwerkzeugs 332 in Schnittdarstellung. Der Absaugring 342 weist ein Absaugrohr 346 auf, welches strömungstechnisch mit einem in dem Absaugring 342 umlaufenden Ringspalt 348 gekoppelt ist. In einer Außenwandung 350 des Adapters sind Absaugöffnungen 352 angeordnet, die einerseits in den Ringspalt 348 münden und andererseits mit einem inneren Absaugkanal 354 gekoppelt sind, der sich entlang der Längsachse 356 des Adapters 336 erstreckt. Der Absaugkanal 354 mündet in eine Absaugöffnung 358, die im Zentrum des tellerförmigen Planeckfräsers 334 angeordnet ist und über die im Inneren des Planeckfräsers 334 anfallende Späne abgesaugt werden.

Unabhängig davon weist das Fräserwerkzeug 332 eine eigenerfinderische Außenspanabsaugung auf, wobei Späne über einen zwischen einem umlaufenden Rand 360 der Absaughaube 344 und einem äußeren umlaufenden Rand 362 des Planeckfräsers 334 gebildeten umlaufenden Absaugspalt 364 abgesaugt werden. Die Späne werden sodann über Absaugöffnungen 366 in den Ringspalt 348 des Absaugrings 342 abgesaugt. Die Absaugöffnungen 366 sind als Langlöcher in einer Seitenwandung der Absaughaube 344 angeordnet und münden in Verbindungskanälen einer Stirnseite des Absaugrings 342, an der die Absaughaube 344 mit der Seitenwandung befestigt ist. Die Verbindungskanäle verbinden die Absaugöffnungen 366 mit dem Ringspalt 348 des Absaugrings 344.

Ein eigenerfinderischer Gedanke bezieht sich auch auf die Ausführung einer Innenkühlung für den Planeckfräser 334.

Fig. 30 zeigt eine Unteransicht des Planeckfräsers 334. Der Planeckfräser 334 ist gemäß Fig. 27 tellerförmig ausgebildet und weist randseitig Aufnahmen 370 für Diamantschneiden 372 auf.

Fig. 31 zeigt eine Schnittdarstellung eines randseitigen Abschnittes des Planeckfräsers 334 im Bereich einer Aufnahme 370 für eine Diamantschneide 372 entlang des Schnittes A-A gemäß Fig. 30. Jeder Diamantschneide 372 ist ein Kühlmittelkanal 374 zugeordnet. Die Kühlmittelkanäle 374 sind über eine Kühlmittel-Verteileranordnung 375 mit einem Kühlmittel-Zulaufkanal bzw. Kühlmitte-Rücklaufkanal gekoppelt. Der Kühlmittelkanal 374 besteht aus einem ersten, parallel zu einer Stirnfläche des Planeckfräsers 334 verlaufenden Abschnitt 376 der sich von dem umlaufenden Rand 362 des Planeckfräsers 334 in radialer Richtung ins Zentrum erstreckt. Eine Austrittsöffnung des Kanalabschnitts 376 ist mittels eines Verschlusselementes 380 verschließbar. Von dem ersten Kanalabschnitt 376 erstreckt sich ein zweiter Kanalabschnitt 382 zu einem in einer Oberfläche 384 des Fräskopfes 334 ringförmig umlaufenden Kühlmittel-Zulauf-Verteilerkanal 386. Des Weiteren erstreckt sich ein dritter Kanalabschnitt 388 zu einem ebenfalls in der Oberfläche 384 ringförmig umlaufenden Kühlmittel-Rücklauf-Verteilerkanal 390.

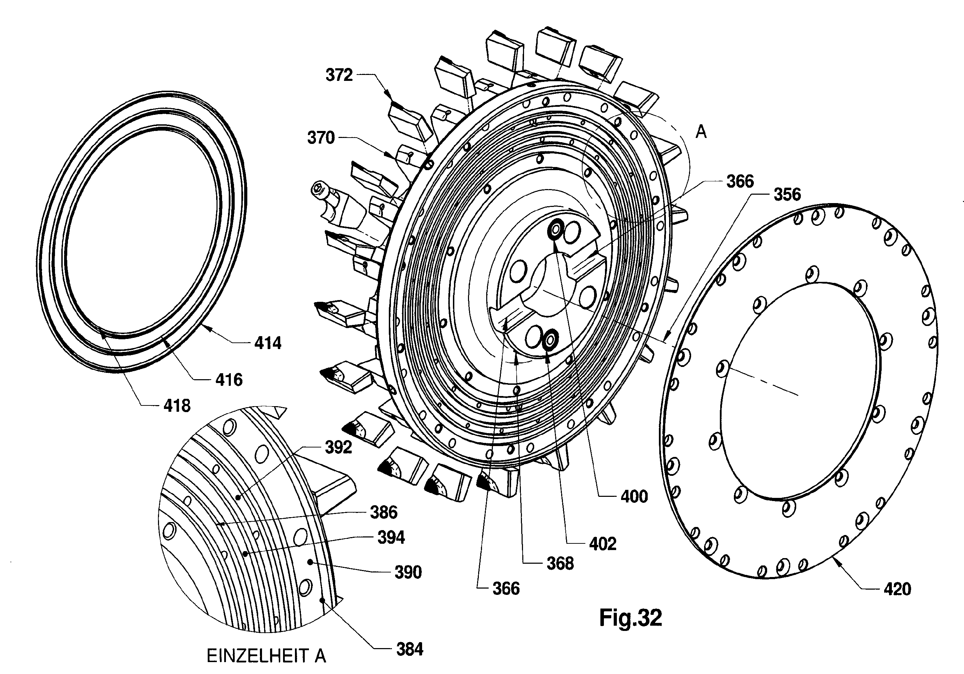

Der Verlauf und die Anordnung der Verteilerkanäle in der Oberfläche 384 des Planeckfräsers 334 werden mit Bezug zu Fig. 32 im Detail erläutert. Fig. 32 zeigt den Planeckfräser 334 in einer Explosionsdarstellung. In der Oberfläche 384 des Planeckfräsers 334 sind der Kühlmittel-Zulauf-Verteilerkanal 386 sowie der Kühlmittelrücklaufkanal 390 als Nut ausgebildet. Von den ringförmigen Kanälen 386, 390 erstrecken sich jeweils die Kanalabschnitte 382, 388, die mit Mündungsenden 392 bzw. 394 jeweils in den ringförmigen Nuten 386, 390 münden und sich zu dem Kanalabschnitt 376 in Längsrichtung entlang der Längsachse 356 erstrecken. Die Kanäle 386, 390 sind über radial verlaufende Zulaufkanäle 396, 398, die im Inneren einer Wandung des Planeckfräsers verlaufen, mit Mündungsöffnungen 400, 402 verbunden, die in den Flansch 370 münden. Die Mündungsöffnungen 400, 402 sind im montierten Zustand gemäß Fig. 29 mit in Längsrichtung in dem Adapter 336 verlaufenden Kanälen 404, 406 verbunden, die in einem umlaufenden Absatz 408 des Adapters 336 durch Mündungsöffnungen 410, 412 münden und mit einem Kühlmittelreservoir verbindbar sind.

Zur Abdichtung der ringförmigen Nuten 386, 390 sind Dichtelemente 414, 416, 418 vorgesehen, die zwischen den Nuten 386, 390 angeordnet sind. Die Nuten 386, 390 sowie die Dichtelemente in Form von O-Ringen 414, 416, 418 werden mit einer kreisringförmigen Abdichtplatte 420 abgedeckt, die mit der Oberfläche 384 des Planeckfräsers 334 verschraubt ist.

## Patentansprüche

1. Zerspanungswerkzeug (10, 110, 166) zur spanenden Bearbeitung von Werkstoffen, umfassend einen Schaft (12, 114, 170) mit einem Werkzeugschneiden (70, 72; 148, 150; 208, 210) aufweisenden Werkzeugkopf (16; 120; 172),
**dadurch gekennzeichnet ,**
**dass** der Schaft (12; 114; 170) einen einzigen in Längsrichtung des Schaftes verlaufenden Kühlmittel-Zulaufkanal (26; 122; 178) und einen einzigen in Längsrichtung verlaufenden Kühlmittel-Rücklaufkanal (28; 124, 180) aufweist und dass der Werkzeugkopf (16; 120; 172) einen einzigen, den Kühlmittel-Zulaufkanal (26; 122; 178) mit dem Kühlmittel-Rücklaufkanal (28; 124; 180) verbindenden Strömungskanal (78; 164; 200) aufweist, welcher thermisch mit den Werkzeugschneiden (70, 72; 148, 150; 208, 210) gekoppelt ist.

2. Zerspanungswerkzeug nach Anspruch 1,
**dadurch gekennzeichnet ,**
**dass** der einzige Strömungskanal (78; 164; 200) thermisch gekoppelt angrenzend an die in dem Werkzeugkopf (16; 120; 172) angeordneten Werkzeugschneiden (70, 72; 148, 150; 208, 210) geführt ist.

3. Zerspanungswerkzeug nach Anspruch 1 oder 2,
**dadurch gekennzeichnet ,**
**dass** der einzige Strömungskanal (78) als zumindest eine Radialbohrung oder als Abschnitt der zumindest einen Radialbohrung in einem Werkzeugkoffer Werkzeugkopfes (16) ausgebildet ist und/oder dass der einzige Strömungskanal (78) aus radial verlaufenden Abschnitten (80, 82) in Form von Radialbohrungen gebildet ist, die sich von einer radialen Außenfläche (64) des Werkzeugkopfes (16) in Richtung einer Mittelachse (84) erstrecken und im Bereich der Mittelachse (84) ineinander übergehen.

4. Zerspanungswerkzeug nach zumindest einem der vorhergehenden Ansprüchen,
**dadurch gekennzeichnet ,**
**dass** die radialen Abschnitte (80, 82) des Strömungskanals (78) jeweils über in Längsrichtung des Schaftes (12) verlaufende Kanäle (94, 96) mit dem Kühlmittel-Zulaufkanal (26) und dem Kühlmittel-Rücklaufkanal (28) gekoppelt sind und/oder die radial verlaufenden Kanalabschnitte (80, 82) entlang ihres Verlaufs Kühlrippen bildende Querschnittserweiterungen (98, 100, 102; 104, 106, 108) aufweisen und/oder dass der Strömungskanal (78) bzw. die Kanalabschnitte (80, 82) randseitig mit einem Verschlusselement (86, 88) wie Madenschraube verschließbar sind.

5. Zerspanungswerkzeug nach zumindest einem der vorhergehenden Ansprüche,
**dadurch gekennzeichnet ,**
**dass** der Schaft (12) als hohlzylinderförmiger Bohrerschaft ausgebildet ist und dass der Kühlmittel-Zulaufkanal (26) sowie der Kühlmittel-Rücklaufkanal (28) in einer Wandung (24) des Bohrerschaftes (12) in Längsrichtung vorzugsweise als Tieflochbohrung ausgebildet sind.

6. Zerspanungswerkzeug nach zumindest einem der vorhergehenden Ansprüche,
**dadurch gekennzeichnet ,**
**dass** der Werkzeugschaft (16) als Bohrkopf ausgebildet und mit dem Bohrerschaft (12) lösbar wie schraubbar verbunden ist, dass der Kühlmittel-Zulaufkanal (26) sowie der Kühlmittel-Rücklaufkanal (28) in einem ringförmigen Arbeitsende (14) des hohlzylinderförmigen Bohrerschaftes (12) enden und mit Mündungsöffnungen der in Längsrichtung verlaufenden Kanalabschnitte (94, 96) des Bohrkopfes (16) gekoppelt sind.

7. Zerspanungswerkzeug nach zumindest einem der vorhergehenden Ansprüche,
**dadurch gekennzeichnet ,**
**dass** der einzige Kühlmittel-Zulaufkanal (122, 178) sowie der einzige Kühlmittel-Rücklaufkanal (124, 180) in einem aus Vollmaterial hergestellten Schaft als Bohrerschaft (114, 170) verläuft, dass der Werkzeugkopf als Bohrkopf (120, 176) lösbar mit dem Bohrerschaft (114, 170) verbunden ist und mit einer Auflagefläche (156, 202) mit einem Arbeitsende (118, 182) des Bohrerschaftes (114, 170) verbindbar ist, wobei in der Auflagefläche (156, 202) des Bohrkopfes (120, 176) der den Kühlmittel-Zulaufkanal (122, 178) mit dem Kühlmittel-Rücklaufkanal (124, 180) verbindenden Strömungskanal (164, 200) angeordnet ist.

8. Zerspanungswerkzeug nach zumindest einem der vorhergehenden Ansprüche,
**dadurch gekennzeichnet ,**
**dass** der Strömungskanal (164; 200) in der Auflagefläche (156,202) des Bohrkopfes (120, 176) durch vorzugsweise Fräsen ausgebildet und an Struktur und Lage der Werkzeugschneiden angepasst ist und/oder dass der Strömungskanal (164; 200) bei zweischneidigem Werkzeugkopf vorzugsweise S-förmig ausgebildet ist.

9. Zerspanungswerkzeug nach zumindest einem der vorhergehenden Ansprüche,
**dadurch gekennzeichnet ,**
**dass** der Strömungskanal (200) über ein in einer Oberfläche (180) des Arbeitsendes (182) in einer Nut (196) angeordnetes Dichtelement (198) wie Dichtlippe abgedichtet ist.

10. Zerspanungswerkzeug nach zumindest einem der vorhergehenden Ansprüche,
**dadurch gekennzeichnet ,**
**dass** eine Stirnfläche (152, 182) des Arbeitsendes (118, 180) des Bohrerschaftes (114, 170) eine Verzahnung aufweist, die mit einer korrespondierenden Verzahnung (154, 212, 214) in einer Auflagefläche (156; 200) des Bohrkopfes (120, 172) zusammenwirkt.

11. Zerspanungswerkzeug nach zumindest einem der vorhergehenden Ansprüche,
**dadurch gekennzeichnet ,**
**dass** der hohlzylinderförmige Bohrerschaft (12) mit einem Adapter (20) verbunden ist, wobei in dem Adapter jeweils ein Verbindungskanal (30, 32) verläuft, der jeweils über den Kühlmittel-Zulaufkanal (26) sowie den Kühlmittel-Rücklaufkanal (28) mit einem Kühlmittel-Reservoir koppelbar ist.

12. Zerspanungswerkzeug nach zumindest einem der vorhergehenden Ansprüche,
**dadurch gekennzeichnet ,**
**dass** der Bohrerschaft (114; 170) eine Werkzeugankopplung (116; 174) aufweist, wobei der Kühlmittel-Zulaufkanal (122; 178) sowie der Kühlmittel-Rücklaufkanal (124; 180) jeweils mit einer Mündungsöffnung in einer Umfangsfläche der Werkzeugankopplung (116, 174) münden und dass auf die Werkzeugankopplung (116; 174) eine vorzugsweise Zweiwege-Drehdurchführung (128, 176) aufsteckbar ist, mit radial verlaufenden Kanälen (130, 132), die mit den Mündungsöffnungen des Kühlmittel-Zulaufkanals sowie des Kühlmittel-Rücklaufkanals strömungstechnisch gekoppelt sind.

13. Zerspanungswerkzeug (216, 332) wie Bohrwerkzeug oder Fräswerkzeug zur spanabhebenden Bearbeitung von Werkstoffen mit einem eine Vielzahl von Werkzeugschneiden (222, 224, 226; 372) aufweisenden Werkzeugträger (218; 334) wie Hohlbohrer (218) oder Planeckfräser (334), insbesondere Planeckfräser, wobei die Werkzeugschneiden über Kühlmittel-Zulaufkanäle (242, 246, 250; 282) und über Kühlmittel-Rücklaufkanäle (244, 248, 252; 388) mit Kühlmittel versorgt werden, die in dem Werkzeugträger (218; 334) ausgebildet sind und über eine Kühlmittel-Verteileranordnung (264; 375) mit einem einzigen Kühlmittel-Zulaufkanal (260; 406) sowie einem einzigen Kühlmittel-Rücklaufkanal (262; 404) strömungstechnisch gekoppelt sind, die in einem mit dem Werkzeugträger (218; 324) verbundenen Adapter (256; 336) verlaufen und mit einem Kühlmittelreservoir gekoppelt sind,
**dadurch gekennzeichnet ,**
**dass** die Kühlmittel-Verteileranordnung (264; 375) einen ringförmigen Kühlmittel-Zulauf-Verteilerkanal (268; 386) aufweist, der eingangsseitig mit dem einzigen Kühlmittel-Zulaufkanal (260; 406) und ausgangsseitig mit der Vielzahl von Kühlmittel-Zulaufkanälen (242, 246, 250; 382) gekoppelt ist und dass die Kühlmittel-Verteileranordnung einen Kühlmittel-Rücklauf-Verteilerkanal (286) aufweist, der eingangsseitig mit der Vielzahl von Kühlmittel-Rücklaufkanälen (244, 248, 252; 388) und ausgangsseitig mit dem einzigen Kühlmittel-Rücklaufkanal (262; 406) gekoppelt ist.

14. Zerspanungswerkzeug nach Anspruch 13,
**dadurch gekennzeichnet ,**
**dass** die Kühlmittel-Verteileranordnung (264) als ein Kühlmittel-Übergabering ausgebildet ist, umfassend eine Kreisringscheibe, wobei auf einer Vorlaufseite (266) der Kühlmittel-Vorlauf-Verteilerkanal (268) in Form einer Nut ausgebildet ist sowie eine Rücklaufseite (284), in der der Kühlmittel-Rücklauf-Verteilerkanal (286) in Form einer Nut ausgebildet ist und dass die Kanäle (268, 286) über Auslauf- und/oder Rücklauföffnungen (276, 278, 280; 288, 290, 292) mit den Kühlmittel-Rücklaufkanälen und/oder Kühlmittel-Zulaufkanälen gekoppelt sind.

15. Zerspanungswerkzeug nach Anspruch 13 oder 14,
**dadurch gekennzeichnet ,**
**dass** die in dem Kühlmittel-Übergabering (264) angeordneten kreisringförmigen Nuten (268, 286) jeweils über kreisringförmige Dichtelemente (298, 300) abgedichtet und zwischen einer Flanschverbindung zwischen einem hohlzylinderförmigen Bohrerschaft (218) und dem Adapter (256) angeordnet sind und/oder dass eine Fixierung der Dichtelemente (298, 300) bezogen auf den Kühlmittel-Übergabering (284) über Stifte (306, 308) erfolgt, die drehsicher in einem umlaufenden Flansch (272) des Adapters (256) aufgenommen sind.

16. Zerspanungswerkzeug nach zumindest einem der Ansprüche 13 bis 15,
**dadurch gekennzeichnet ,**
**dass** die Kühlmittel-Verteileranordnung in einer Oberfläche (384) des tellerförmigen Planfräsers (334) angeordnet ist, umfassend einen ringförmig umlaufenden Kühlmittel-Zulauf-Verteilerkanal (386), der eingangsseitig mit dem einzigen Kühlmittel-Zulaufkanal (406) und ausgangsseitig mit der Vielzahl von Kühlmittel-Zulaufkanälen (382) gekoppelt ist sowie ein ringförmig umlaufender Kühlmittel-Rücklauf-Verteilerkanal (390), der eingangsseitig mit der Vielzahl von Kühlmittel-Rücklaufkanälen (388) und ausgangsseitig mit dem einzigen Kühlmittel-Rücklaufkanal (404), der in einem Adapter (408) verläuft, gekoppelt ist.

17. Zerspanungswerkzeug nach zumindest einem der Ansprüche 13 bis 16,
**dadurch gekennzeichnet ,**
**dass** der Kühlmittel-Zulauf-Verteilerkanal (386) sowie der Kühlmittel-Rücklauf-Verteilerkanal (390) jeweils als ringförmig umlaufende Nut in der Oberfläche (384) des Planfräsers (334) ausgebildet sind, wobei zwischen den Kanälen (386, 390) Dichtelemente (414, 416, 418) in Form von O-Ringen verlaufen und wobei die Verteilerkanäle (386, 390) sowie die Dichtelemente (414, 416, 418) durch eine Abdeckung (420) fluiddicht abgedichtet sind.
